# EUROPEAN PATENT APPLICATION

(11) **EP 2 706 380 A2**
(43) Date of publication of application: **12.03.2014**
(21) Application number: 13180693.7
(22) Date of filing: 16.08.2013
(51) Int. Cl.: G01S 19/24, G01S 19/28, G01S 19/37

(54) **System and method for locating a satellite signal receiver**

(30) Priority: 05.09.2012 CN 201210325759; 12.08.2013 US 201313964187
(71) Applicant: O2 Micro, Inc., Santa Clara, CA 95054 (US)
(72) Inventor: Liu, Mao, 201203 Shanghai (CN); Gao, Ke, 610041 Chengdu (CN)
(74) Representative: Lippert, Stachow & Partner

(57) **Abstract**

System and method for locating a satellite signal receiver are disclosed. The system includes a channel opening module, a signal processing module, and a positioning module. The channel opening module is configured for opening a predetermined number of channels based on a priority schedule. The signal processing module is configured for capturing and tracking satellite signals via the opened channels, and demodulating the tracked satellite signals to obtain corresponding satellite data. The positioning module is configured for determining a position of the satellite signal receiver based on the satellite data.

## Description

### RELATED APPLICATION

The present application claims priority to Patent Application No. 201210325759.8, filed on September 5, 2012, with the State Intellectual Property Office of the People's Republic of China.

### BACKGROUND

A conventional satellite navigation system, e.g., Global Positioning System or BeiDou Satellite Navigation System (hereinafter "BeiDou"), usually opens all channels corresponding to the number of satellites the system is able to simultaneously monitor, to capture, track and demodulate satellite signals/data after turning on a corresponding satellite signal receiver, so as to obtain an accurate position/location of the corresponding satellite signal receiver.

However, high positioning accuracy is not required in many applications. Thus, it is not necessary to open all the channels in those applications. For example, when a satellite signal receiver is utilized in a camera, locations appeared in videos or photos do not require an accuracy at a meter level. An approximate location displayed in the video or the photo can meet a user's demand. In this situation, opening all channels for positioning results in unnecessary power consumption. Therefore, there is a need to locate a satellite signal receiver with flexible number of channels to improve power efficiency and avoid unnecessary power consumption.

### SUMMARY

In one embodiment, a system for locating a satellite signal receiver is disclosed. The system includes a channel opening module, a signal processing module, and a positioning module. The channel opening module is configured for opening a predetermined number of channels based on a priority schedule. The signal processing module is configured for capturing and tracking satellite signals via the opened channels, and demodulating the tracked satellite signals to obtain corresponding satellite data. The positioning module is configured for determining a position of the satellite signal receiver based on the satellite data.

In another embodiment, a method for locating a satellite signal receiver is disclosed. A predetermined number of channels is opened based on a priority schedule. Satellite signals are captured and tracked via the opened channels. The tracked satellite signals are demodulated for obtaining corresponding satellite data. A position of the satellite signal receiver is determined based on the satellite data.

Additional benefits and novel features will be set forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentalities and combinations set forth in the detailed description set forth below.

### BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings, and wherein:

FIG. 1 illustrates a block diagram of an example of a satellite signal receiver, in accordance with an embodiment of the present teaching;

FIG. 2 illustrates a block diagram of an example of a satellite signal receiver, in accordance with another embodiment of the present teaching;

FIG. 3 illustrates a block diagram of an example of a satellite signal receiver, in accordance with yet another embodiment of the present teaching;

FIG. 4 illustrates a block diagram of an example of a satellite signal receiver, in accordance with yet another embodiment of the present teaching;

FIG. 5 illustrates a block diagram of an example of a satellite signal receiver, in accordance with yet another embodiment of the present teaching;

FIG. 6 illustrates a flowchart of an exemplary method for locating a satellite signal receiver, in accordance with an embodiment of the present teaching;

FIG. 7 illustrates a flowchart of an exemplary method for locating a satellite signal receiver, in accordance with another embodiment of the present teaching; and

FIG. 8 illustrates a flowchart of an exemplary method for locating a satellite signal receiver, in accordance with yet another embodiment of the present teaching.

### DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

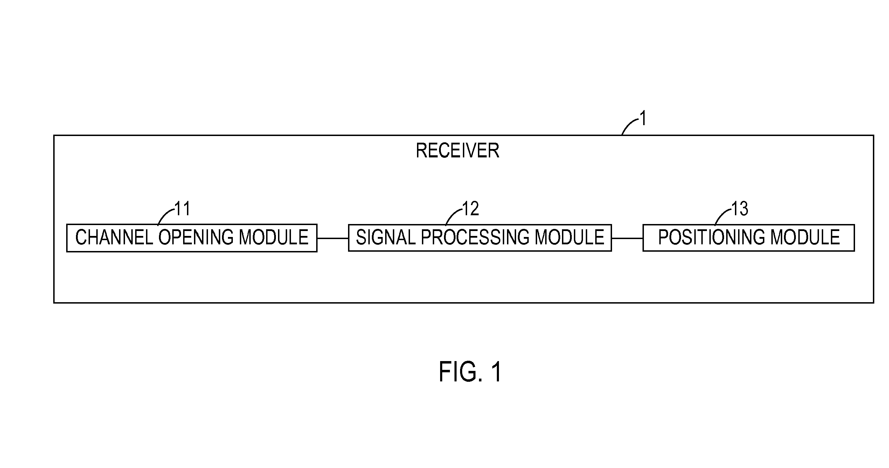

FIG. 1 illustrates a block diagram of an example of a satellite signal receiver 1, in accordance with an embodiment of the present teaching. As shown in FIG. 1, one embodiment of a satellite signal receiver 1 includes a channel opening module 11, a signal processing module 12, and a positioning module 13.

The channel opening module 11 of this embodiment is configured for opening a predetermined number of channels based on a preset priority schedule indicating priorities of satellites. In one embodiment, the predetermined number is less than the total number of available channels in the satellite signal receiver 1. For example, the total number can be twelve, and the predetermined number can be one, four, or six, etc. The signal processing module 12 in this embodiment is configured for capturing and tracking satellite signals via the opened channels, demodulating the tracked satellite signals for obtaining corresponding satellite data carried by the tracked satellite signals, and downloading corresponding satellite data. The positioning module13 in this embodiment is configured for determining a current position/location of the satellite signal receiver 1 based on the downloaded satellite data.

In conventional navigation applications, after turning on a receiver, the navigation system in the receiver opens all the channels to capture and track satellite signals, and demodulates an ephemeris, so as to locate the receiver as soon as possible. A navigation system can obtain a positioning accuracy by tracking the channels. However, opening all channels for positioning can cause relatively high power consumption. Therefore, after turning on the receiver, the navigation system can effectively reduce the power consumption by opening as few channels as possible to capture and track the satellite signals.

In one configuration, the receiver needs at least four satellites for positioning and the receiver in such an embodiment needs to open four or more channels for positioning to occur. If a higher positioning accuracy is required, the number of the opened channels can be increased, e.g., to six channels. Thus, the receiver 1 may utilize the channel opening module 11 to open a corresponding number of channels based on a requirement on positioning accuracy of the receiver, so as to capture and track the satellite signals. The receiver 1 can effectively reduce power consumption for positioning.

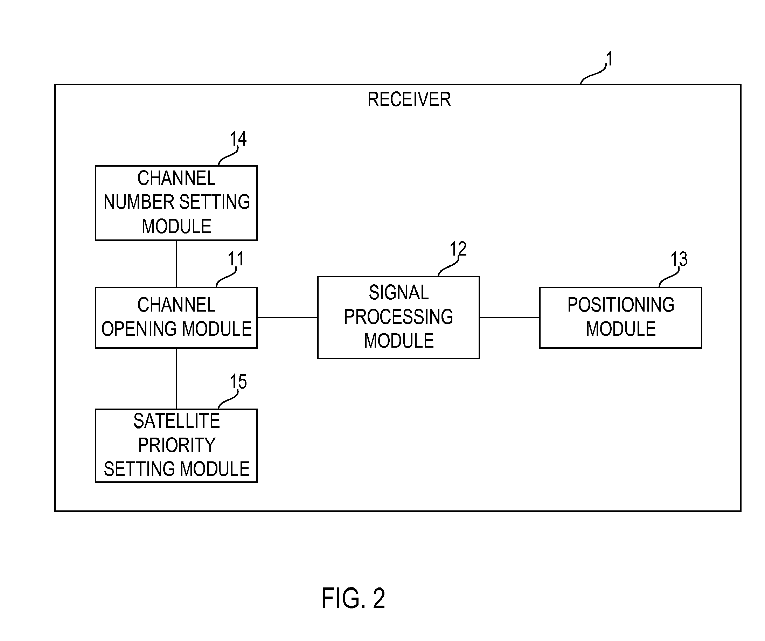

FIG. 2 illustrates a block diagram of an example of a satellite signal receiver 1, in accordance with another embodiment of the present teaching. The satellite signal receiver 1 in the example of FIG. 2 further includes a channel number setting module 14 and a satellite priority setting module 15.

The channel number setting module14 is configured for setting the predetermined number of channels that are used to capture and track satellite signals, based on a requirement on positioning accuracy of the satellite signal receiver 1. The higher the requirement on the positioning accuracy is, the more channels can be opened. In other words, if the requirement on the positioning accuracy increases, the channel number setting module14 increases the predetermined number accordingly. Additionally, the satellite priority setting module 15 sets the priority schedule based on an ephemeris stored in the receiver 1 and/or based on types of the satellites. For example, a satellite whose signal is captured more easily (hereinafter, an "easily captured satellite") can have a higher priority. In one embodiment, a first satellite has a higher priority than a second satellite if the satellite priority setting module 15 determines that a signal from the first satellite can be captured more easily than a signal from the second satellite. Thus, the channel opening module 11 can open a channel corresponding to the easily captured satellite.

More specifically, the satellite priority setting module 15 can obtain the information regarding which satellite is currently available based on the ephemeris in the receiver 1, and can organize the available satellites in a star search queue according to degrees of difficulty for capturing the signals from the available satellites. In one embodiment, the satellite priority setting module 15 can also adjust the order of the satellites in the star search queue according to the types of the satellites, e.g., by adjusting the schedule of priorities of the satellites in the star search queue. In one example, regarding the BeiDou (BeiDou Satellite Navigation System) receiver, a GEO (Geostationary Earth Orbit) satellite can be among the first satellites selected when the GEO satellite is set with a higher priority. This is because the GEO satellite is a geosynchronous satellite, and the signal from the GEO satellite is likely to be successfully captured if a temperature compensated crystal oscillator (TCCO) in the receiver 1 does not have a large offset or a large frequency error when the ephemeris in the receiver 1 is valid. In such an embodiment, the MEO (Middle Earth Orbit) satellite may be selected after the GEO satellite.

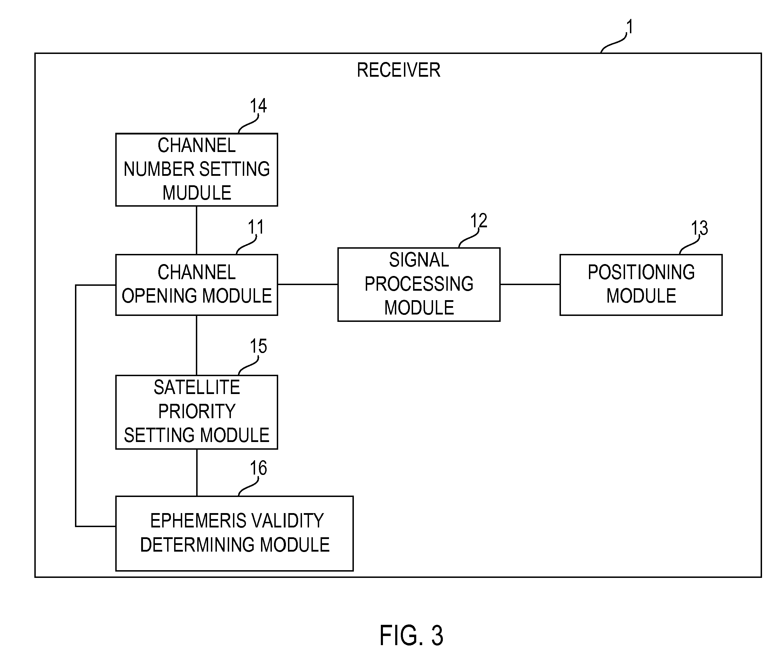

FIG. 3 illustrates a block diagram of an example of a satellite signal receiver 1, in accordance with yet another embodiment of the present teaching. The receiver 1 in the example of FIG. 3 further includes an ephemeris validity determining module 16.

The ephemeris validity determining module 16 is configured for determining whether the ephemeris in the receiver 1 is valid. If the ephemeris validity determining module 16 determines that the ephemeris is valid, the satellite priority setting module 15 can perform calculation based on the valid ephemeris to determine/find current visible satellites, and the channel opening module 11 can open the predetermined number of channels corresponding to the satellites having higher priorities based on the priority schedule of satellites set by the satellite priority setting module 15.

On the other hand, if the ephemeris validity determining module 16 determines that the ephemeris is invalid, the satellite priority setting module 15 can ignore the ephemeris and the corresponding priority schedule, and search for available/visible satellites by receiving signals from all possible satellites successively, e.g., one by one starting from the first satellite. To capture and track signals from the available/visible satellites, the channel opening module 11 opens a set of channels with a total number greater than or equal to the above mentioned predetermined number. In other words, the number of the opened channels is equal to or greater than the predetermined number. In one embodiment, if the channel opening module 11 opens the predetermined number of channels to capture and track the satellite signals, power consumption for the positioning can be controlled such that the level of power consumption is roughly the same as that in a situation when the ephemeris is valid. However, the time for positioning may be longer because signals from some satellites are difficult to be captured. Therefore, the channels opening module 11 can increase the number of the channels to be opened to reduce the time for positioning, so as to achieve a balance among positioning speed, positioning accuracy, and power consumption.

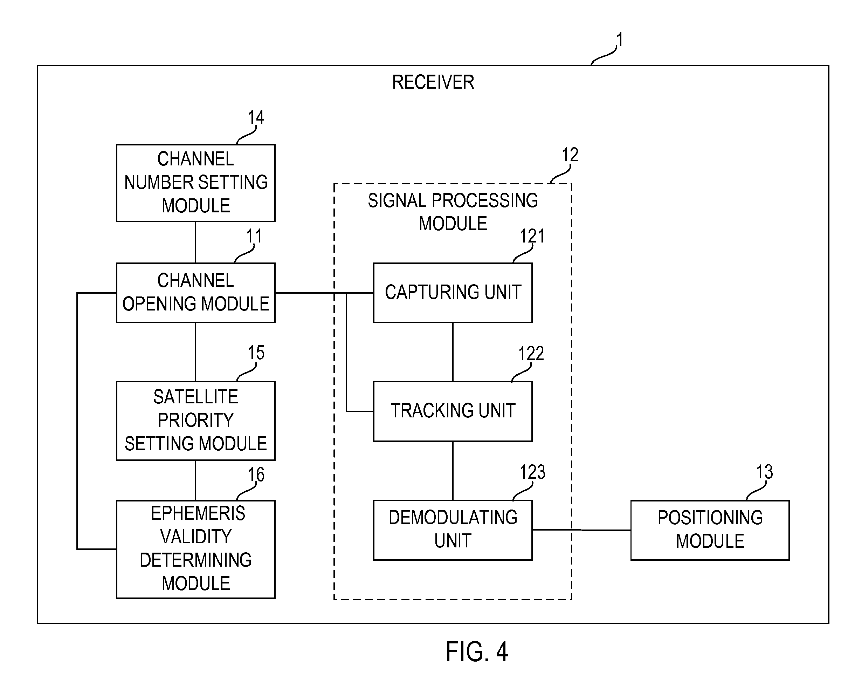

FIG. 4 illustrates a block diagram of an example of a satellite signal receiver 1, in accordance with yet another embodiment of the present teaching. The signal processing module 12 of the receiver 1, in the example of FIG. 4, includes a capturing unit 121, a tracking unit 122, and a demodulating unit 123.

The capturing unit 121 in this embodiment is configured for capturing satellite signals via the channels opened by the channel opening module 11. The tracking unit 22 in this embodiment is configured for tracking the satellite signals received by the capturing unit 121. The demodulating unit 123 in this embodiment is configured for demodulating the satellite signals tracked by the tracking unit 123 and downloading the corresponding satellite data, such that the positioning module 13 can calculate a current position of the receiver 1 based on the downloaded satellite data.

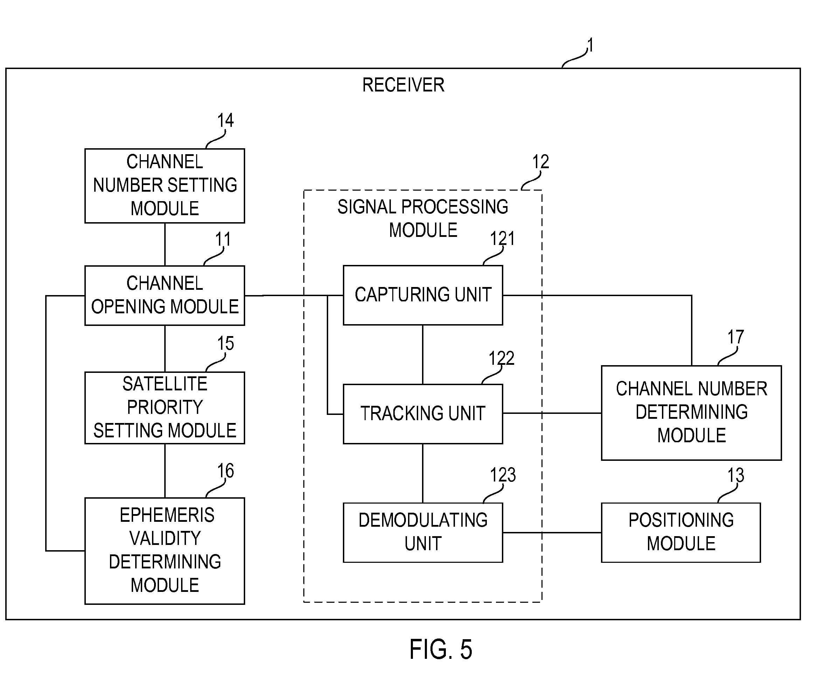

FIG. 5 illustrates a block diagram of an example of a satellite signal receiver 1, in accordance with yet another embodiment of the present teaching. The receiver 1 in the example of FIG. 5 further includes a channel number determining module 17.

In one embodiment, the receiver 1 can track a satellite signal captured via an opened channel. In other words, an opened channel becomes an occupied channel for tracking the satellite signal. If the tracked satellite signal is weak or lost, the occupied channel can be vacated for awaiting a next satellite signal. In one embodiment, during a tracking process, the channel number determining module 17 determines whether the number of the channels occupied for tracking satellite signals reaches the above mentioned predetermined number. If the channel number determining module 17 determines that the number of the occupied channels reaches the predetermined number, the capturing unit 121 ceases capturing satellite signals via an opened channel. As mentioned before, if a tracked satellite signal is weak or lost, a corresponding occupied channel may be vacated, and the number of the occupied channels may decrease. If the number of the occupied channels is less than the predetermined number, in other words there is one or more spare channels for tracking satellite signals, the capturing unit 121 restarts capturing satellite signals.

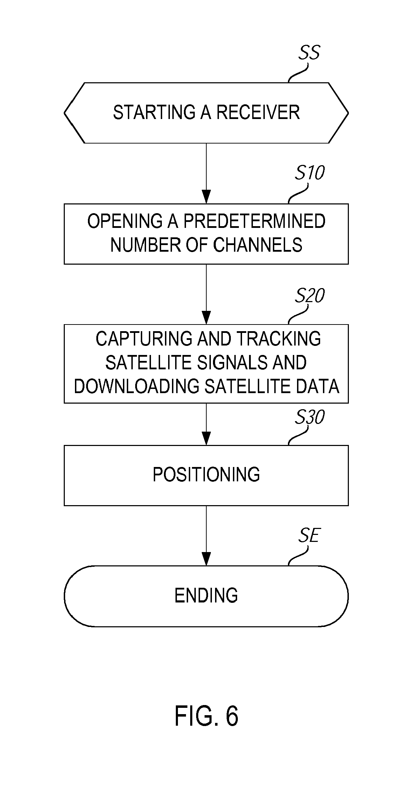

FIG. 6 illustrates a flowchart of an exemplary method for locating a satellite signal receiver, in accordance with an embodiment of the present teaching. The exemplary method may be implemented on a machine having at least one processor, storage, and a communication platform. The present teaching is well suited for performing various variations of the method in FIG. 6.

At S10, after starting the satellite signal receiver, a predetermined number of channels are opened based on a preset priority schedule of satellites. At S20, a satellite signal is captured and tracked via an opened channel, the tracked satellite signal is demodulated, and corresponding satellite data is downloaded. At S30, a current position of the satellite signal receiver is determined based on the corresponding satellite data. The positioning process is terminated at SE.

In one embodiment, before the S10 disclosed in FIG. 6, the satellite signal receiver sets the predetermined number of channels based on a requirement on positioning accuracy of the receiver, such that the predetermined number increases if the requirement increases, e.g., the higher the requirement on the positioning accuracy is, the more the opened channels can be.

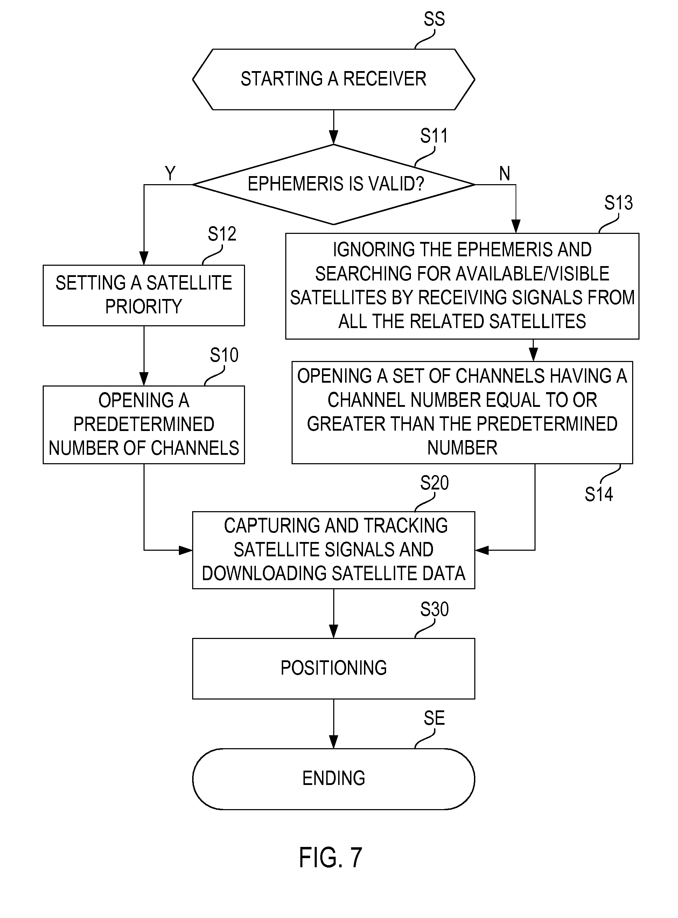

FIG. 7 illustrates a flowchart of an exemplary method for locating a satellite signal receiver, in accordance with another embodiment of the present teaching. The exemplary method may be implemented on a machine having at least one processor, storage, and a communication platform. The present teaching is well suited for performing various variations of the method in FIG. 7.

In one embodiment, the receiver also performs an operation that determines whether an ephemeris stored in the receiver is valid, and an operation that sets a priority schedule of satellites based on the ephemeris and/or the types of the satellites, so as to open a channel corresponding to an above mentioned easily captured satellite.

More specifically, as shown in FIG. 7, the process moves to S11 after the receiver starts at SS. At S11, the receiver determines whether the ephemeris in the receiver is valid. On one hand, if the ephemeris is valid, the receiver can determine which satellites are available/visible currently based on the ephemeris in the receiver, so as to set, at S12, a priority schedule of satellites, e.g., based on the ephemeris and /or the types of the satellites. In the priority schedule, a satellite whose signal can be captured more easily has a higher priority. At S10, the receiver opens a predetermined number of channels corresponding to the satellites having higher priority in the priority schedule. On the other hand, if the ephemeris is invalid at S11, the process moves to S13. At S13, the receiver ignores the ephemeris and the corresponding priority schedule, and searches for available/visible satellites by receiving signals from all possible satellites one by one. At S14, the receiver opens a set of channels to capture and track the satellite signals, and the number of the opened channels is equal to or greater than the above mentioned predetermined number.

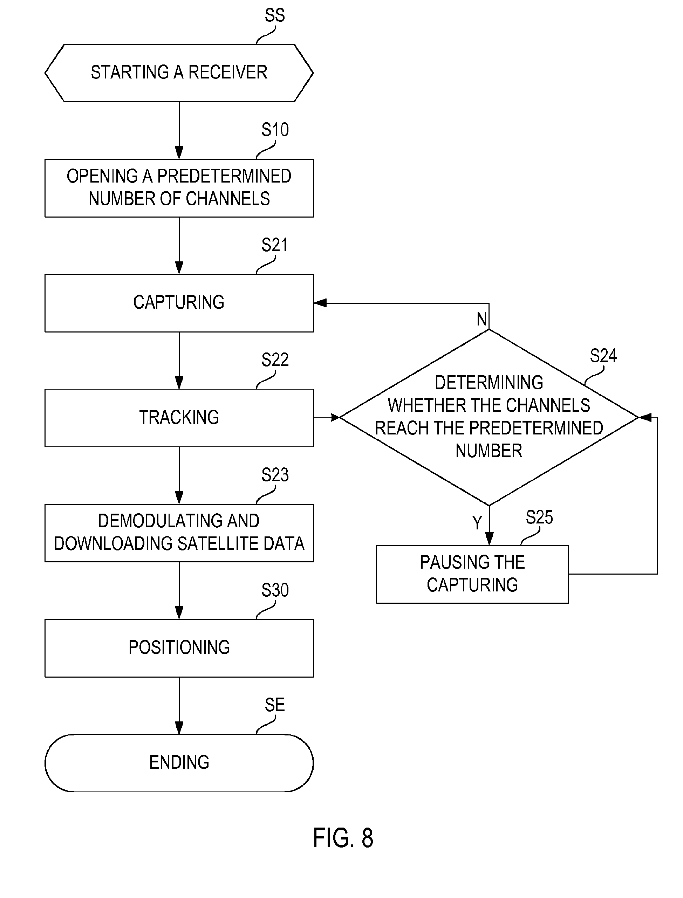

FIG. 8 illustrates a flowchart of an exemplary method for locating a satellite signal receiver, in accordance with yet another embodiment of the present teaching. The exemplary method may be implemented on a machine having at least one processor, storage, and a communication platform. The present teaching is well suited for performing various variations of the method in FIG. 8. In the example of FIG. 8, the S20 previously disclosed in FIG. 6 further includes a capturing operation S21 to capture satellite signals via the channels opened at S10; a tracking operation S22 to track the captured satellite signals; and a demodulating operation S23 to demodulate the tracked satellite signals and download corresponding satellite data.

In the example of FIG. 8, the S20 disclosed in FIG. 6 further includes an operation S24 to determine whether the number of channels occupied for tracking satellite signals reaches the predetermined number during a tracking process, e.g., determines whether the opened channels are full. If the opened channels are full, the process moves to S25, in which the receiver pauses capturing satellite signals until the number of the occupied channels becomes less than the predetermined number, e.g., there is a spare opened channel. If a spare opened channel exists, the process moves to S21 to capture and track satellite signals again.

The present teaching can be applied not only in a dual-mode receiver but also in a single-mode receiver. The embodiments according to the present teaching can be applied receivers such as GPS receivers, BeiDou receivers, Glonass receivers, and Galileo receivers.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

## Claims

1. A system for locating a satellite signal receiver, comprising:
a channel opening module configured for opening a predetermined number of channels based on a priority schedule;
a signal processing module coupled to the channel opening module and configured for
capturing and tracking satellite signals via the opened channels,
demodulating the tracked satellite signals to obtain corresponding satellite data; and
a positioning module coupled to the signal processing module and configured for determining a position of the satellite signal receiver based on the satellite data.

2. The system of claim 1, further comprising:
a channel number setting module configured for setting the predetermined number based on a requirement on positioning accuracy of the satellite signal receiver.

3. The system of claim 1 or 2, further comprising:
a satellite priority setting module configured for setting the priority schedule based on at least one of an ephemeris stored in the satellite signal receiver and types of satellites, wherein a first satellite has a higher priority than a second satellite if the satellite priority setting module determines that a signal from the first satellite is captured more easily than a signal from the second satellite.

4. The system of claim 3, further comprising:
an ephemeris validity determining module configured for determining whether the ephemeris is valid, wherein
if the ephemeris validity determining module determines that the ephemeris is valid, the satellite priority setting module sets the priority schedule based on the ephemeris, and the channel opening module opens the predetermined number of channels based on the priority schedule; and
if the ephemeris validity determining module determines that the ephemeris is invalid, the channel opening module opens channels with a totalnumber greater than or equal to the predetermined number.

5. The system of one of claims 1 to 4, wherein the signal processing module comprises:
a capturing unit configured for capturing the satellite signals via the opened channels;
a tracking unit, coupled to the capturing unit and configured for tracking the captured satellite signals; and
a demodulating unit, coupled to the tracking unit and configured for demodulating the tracked satellite signals to obtain the corresponding satellite data.

6. The system of claim 5, further comprising:
a channel number determining module configured for determining whether the number of channels occupied for tracking the satellite signals reaches the predetermined number,
wherein if the channel number determining module determines that the number of occupied channels reaches the predetermined number, the capturing unit ceases capturing satellite signals.

7. The system of claim 6, wherein when the capturing unit ceases capturing satellite signals, if the channel number determining module determines that the number of occupied channels is less than the predetermined number, the capturing unit restarts capturing satellite signals.

8. A method for locating a satellite signal receiver, comprising:
opening a predetermined number of channels based on a preset priority schedule;
capturing and tracking satellite signals via the opened channels;
demodulating the tracked satellite signals to obtain corresponding satellite data; and
determining a position of the satellite signal receiver based on the satellite data.

9. The method of claim 8, further comprising:
setting the predetermined number based on a requirement for positioning accuracy of the satellite signal receiver.

10. The method of claim 8 or 9, further comprising:
setting the priority schedule based on at least one of an ephemeris stored in the satellite signal receiver and types of satellites,
wherein a first satellite has a higher priority than a second satellite if a signal from the first satellite is captured more easily than a signal from the second satellite.

11. The method of claim 10, further comprising:
determining whether the ephemeris is valid;
if the ephemeris is valid,
setting the priority schedule based on the ephemeris, and opening the predetermined number of channels based on the priority schedule; and
if the ephemeris is invalid,
opening channels with a total number greater than or equal to the predetermined number.

12. The method of one of claims 8 to 11, further comprising:
downloading the corresponding satellite data.

13. The method of one of claims 8 to 12, further comprising:
determining whether the number of channels occupied for tracking the satellite signals reaches the predetermined number; and
ceasing capturing satellite signals if the number of occupied channels reaches the predetermined number.

14. The method of claim 13, further comprising:
restarting capturing satellite signals if the number of occupied channels is less than the predetermined number.
